# EUROPÄISCHE PATENTSCHRIFT

(11) **EP 0 531 847 B1**
(45) Veröffentlichungstag und Bekanntmachung des Hinweises auf die Patenterteilung: **24.11.1999**
(21) Anmeldenummer: 92114837.5
(22) Anmeldetag: 31.08.1992
(51) Int. Cl.: C08G 64/40, C08J 3/14

(54) **Kohlendioxid-Destraktion von Polycarbonat**
Distraction of polycarbonate with carbon dioxide
Déstraction de polycarbonate avec le dioxide de carbone

(30) Priorität: 11.09.1991 DE 4130105
(43) Veröffentlichungstag der Anmeldung: 17.03.1993
(73) Patentinhaber: BAYER AG, 51368 Leverkusen (DE)
(72) Erfinder: Paul, Hanns-Ingolf, Dr., W-5000 Köln 80 (DE); Treckmann, Rolf, Dipl.-Ing., W-5000 Köln 80 (DE); Weymans, Günther, Dr., W-5090 Leverkusen 1 (DE); Kirsch, Jürgen, Dr., W-5090 Leverkusen 1 (DE); Herrig, Wolfgang, Dr., W-5060 Bergisch Gladbach (DE)

(56) Entgegenhaltungen:
- EP-A- 0 184 935
- EP-A- 0 334 314
- EP-A- 0 492 243
- MACROMOLECULES, Band 18, Nr. 4, 1985, Seiten 674-680, American Chemical Society; M.A. McHUGH et al.: "Separating polymer solutions with supercritical fluids"

## Beschreibung

In der Deutschen Patentanmeldung P 4 118 230.8 ist ein Verfahren zur Isolierung von Polymeren aus ihren Lösungsmitteln beschrieben durch Zugabe kohlendioxidhaltiger Fluide bei Temperaturen von 30°C bis 280°C und Drücken von 1 bar bis 1000 bar, das dadurch gekennzeichneitet ist, daß die Konzentration der Polymeren in ihren Lösungsmitteln jeweils zwischen 5 Gew.-% und 80 Gew.-% beträgt und das kohlendioxidhaltige Fluid aus mindestens 50 Gew.-% Kohlendioxid besteht.

Gegenüber anderen Versuchen zur Isolierung von Polymeren aus ihren Lösungsmitteln, wie sie beispielsweise in den Patentschriften US 4 634 761, EP 334 314-A2, DE 3 840 293, JP 01 168 730-A2 und der Publikation "Yamamoto Koji" et al: Kagaku Kogaku Ronbunshu 15(3), Jahrgang 1989, Seiten 673-675" beschrieben sind, hat das dort beschriebene Verfahren den Vorteil, bei geringer Temperaturbelastung des Produktes schnell und einfach große Mengen Lösungsmittel zu entfernen.

In der Deutschen Patentanmeldung P 4 117 751.7 wurde zusätzlich gefunden, daß sich unter Anwendung einer speziellen Maßnahme für Polycarbonate das in der P 4 118 230.8 beschriebene Isolierverfahrenhinsichtlich der Pulverform verbessern läßt.

In jener Anmeldung wird ein kontinuieriiches Verfahren zur Isolierung von Polycarbonaten aus Methylenchlorid bei Temperaturen zwischen 30 und 80°C als Pulver mit Restlösungsmittelgehalten unter 5 Gew.-% beschrieben, dadurch gekennzeichnet, daß man
a) ausgehend von einer Polycarbonat-Methylenchlorid-Lösung, die 10 bis 40 Gew.-% Polycarbonat, bezogen auf das Gesamtgewicht der Polycarbonat-Lösung, enthält,
b) zunächst kohlendioxidhaltiges Fluid so einmischt, daß das System Polycarbonat-Methylenchlorid-Kohlendioxid noch nicht geliert, üblicherweise bei Drücken zwischen 10 und 50 bar und Temperaturen zwischen 30 und 50°C,
c) anschließend die unter Druck stehende Lösung, die Polycarbonat, Methylenchlorid und kohlendioxidhaltiges Fluid enthält, in einer Zweistoffdüse mit weiterem kohlendioxidhaltigen Fluid unter einem Druck zwischen 50 und 300 bar, bevorzugt zwischen 70 und 200 bar bei Temperaturen zwischen 40 und 80°C, bevorzugt 45 und 60°C, zusammenbringt,
d) wobei zwischen der Maßnahme b) und c) eine Verweilzeit von mindestens 0.1 Sekunden realisiert wird und
e) die Dosierung von kohlendioxidhaltigem Fluid generell so gesteuert wird, daß in der Maßnahme b) Polycarbonat noch nicht geliert oder ausfällt und in der Maßnahme c) das System Polycarbonat:Methylenchlorid:Kohlendioxid oberhalb des Gelierbereiches ist und Polycarbonat rasch als Festpartikel aus dem Dreiphasensystem ausfällt,
f) wobei gegebenenfalls Methylenchlorid und Kohlendioxid-Gase in einem Verdichter/Kondensatorsystem im wesentlichen getrennt und Kohlendioxid in den Destraktionsprozeß zurückgeführt wird.

Gegenstand der vorliegenden Erfindung ist ein auf die beiden oben angeführten Patentanmeldungen anwendbares, spezielles Anfahren des Verfahrens. Gerade bei Fällverfahren ist es sehr wichtig, beim Beginn des Produktionsprozesses in den Verfahrensapparaturen Verstopfungen durch unkontrollierte Ausfällungen zu vermeiden. Die vorliegende Erfindung optimiert den Anfahrvorgang bei der Isolierung von Polycarbonat aus Methylenchlorid mit Hilfe einer CO₂-Destraktion.

Es wurde gefunden, daß die Standzeit des Destraktionsverfahrens verbessert werden kann, wenn in einer Zweistoffdüse, in welcher kontinuierlich CO₂-haltiges Fluid und die Polymerlösung zusammengebracht werden, zunächst unter hohem CO₂-Überschuß angefahren wird und anschließend unter kontinuierlichem Abbau des CO₂-Durchsatzes bis auf ein Verhältnis CO₂-Fluid zu organische Lösung von 4:1 bis 2:1 der Gelierbereich des Polycarbonat-Methylenchlorid-CO₂-Fluid-Phasendiagramms durchschritten wird.

Gegenstand der vorliegenden Erfindung ist ein Verfahren zur Isolierung von Polycarbonaten aus Methylenchlorid unter Fällung in kohlendioxidhaltigem Fluid, wobei man
a) ausgehend von einer Polycarbonat-Methylenchlorid-Lösung, die 10 bis 40 Gew.-% Polycarbonat, bezogen auf das Gesamtgewicht der Polycarbonat-Lösung, enthält,
b) ggf. zunächst kohlendioxidhaltiges Fluid so einmischt, daß das System Polycarbonat-Methylenchlorid-Kohlendioxid noch nicht geliert, bei Drücken zwischen 10 und 50 bar und Temperaturen zwischen 30 und 50°C,
c) anschließend die Lösung, die Polycarbonat, Methylenchlorid und ggf. kohlendioxidhaltiges Fluid enthält, in einer Zweistoffdüse mit kohlendioxidhaltigem Fluid unter einem Druck zwischen 50 und 300 bar, bevorzugt zwischen 70 und 200 bar bei Temperaturen zwischen 40 und 80°C, bevorzugt 45 und 60°C, zusammenbringt,
d) wobei zwischen der Maßnahme b) und c) eine Verweilzeit von mindestens 0.1 Sekunden realisiert wird und
e) die Dosierung von kohlendioxidhaltigem Fluid so gesteuert wird, daß in der Maßnahme b) Polycarbonat noch nicht geliert oder ausfällt und in der Maßnahme c) das System Polycarbonat:Methylenchlorid:Kohlendioxid oberhalb des Gelierbereichs ist und Polycarbonat rasch als Festpartikel aus dem Dreiphasensystem ausfällt,
dadurch gekennzeichnet, daß das Verfahren durch die Maßnahmen
f) Anfahren unter hohem CO₂-Überschuß von mindestens 7 bis 15 Gewichtsteilen kohlendioxidhaltiges Fluid pro Gewichtsteil Polymerlösung und
g) Reduzierung des CO₂-Überschusses binnen 1 bis 10 Minuten auf Überschüsse von 4:1 bis 2:1 pro Gewichtsteil Polycarbonat-Lösung,
hinsichtlich seiner Standzeit verbessert wird, wobei
h) während dieser Zeit der Gelierbereich des Polycarbonat-Methylenchlorid-CO₂-Fluid-Phasendiagramms durchschritten wird.

Geignete kohlendioxidhaltige Fluide sind solche Fluide, die zu wenigstens 50 Gew.-%, bevorzugt zu wenigstens 80 Gew.-%, bezogen auf das Gesamtgewicht der Fluidmasse, reines Kohlendioxid enthalten.

Geignete Polycarbonate sind alle thermoplastischen und aliphatischen Polycarbonate mit Molekulargewichten, Lösungsviskositäten, Verteilungen und Einheitlichkeiten in bekannten Bereichen. Wichtig ist lediglich, daß die einzusetzenden Polycarbonate bei den verwendeten Temperaturen in Methylenchlorid löslich sind. Bevorzugte Polycarbonate sind aromatische Polycarbonate auf Basis von Diphenolen wie sie zum Beispiel in den US-PS 3 028 365, 2 999 835, 3 148 172, 3 275 601, 2 991 273, 3 271 367, 30 962 781, 2 970 131 und 2 999 846, in den DE-OS 1 570 703, 2 063 050, 2 063 052, 22 110 956 beschrieben sind. Besonders bevorzugte Polycarbonate sind solche, die zu wenigstens 5 Mol-%, bezogen auf Gesamtmenge an eingesetzten Diphenolen (=100 Mol-%) Diphenole der Art
4,4'-Dihydroxydiphenyl,
2,2-Bis-(4-hydroxyphenyl)-propan
2,2-Bis-(3,5-dimethyl-4-hydroxyphenyl)-propan
enthalten. Die Polycarbonate können Copolymere oder Homopolymere sein, es können auch Mischungen eingesetzt werden. Die Copolymere können Block- oder statistische Copolymere sein, auch Verzweigungen sind erlaubt.

Die Polycarbonate haben im allgemeinen Molekulargewichte zwischen 15.000 g/mol und 200.000 g/mol (Gewichtsmittel, bestimmt mit Gelpermeationschromatographie). Bevorzugte Molekulargewichte liegen zwischen 18.000 g/mol und 45.000 g/mol.

Andere Komponenenten, die zusammen mit dem Kohlendioxid das kohlendioxidhaltige Fluid bilden, können alle anderen Komponenten sein, die dem Polycarbonat und dem Methylenchlorid nicht schaden, Gegebenenfalls können hier schon Komponenten eingesetzt werden, die im Polycarbonat gegenüber äußeren Einflüssen (UV-, Bewitterung etc.) als Stabilisator wirken.

Als Mischorgan werden Zweistoffdüsen verwendet. Die verwendbaren Zweistoffdüsen sind bevorzugt solche, die das niedrigviskose kohlendioxidhaltige Fluid mit dem höherviskosen Methylenchlorid-Fluid-Polycarbonat-System gut vermischen und noch eine Verweilzeit unter guten Mischbedingungen in der Düse von wenigstens 1/30tel Sekunde anbieten.

Das ausgefällte Polycarbonat wird zusammen mit dem Methylenchlorid und dem kohlendioxidhaltigen Fluid in einem Behälter entspannt. Die Anordnung der Düse und des Entspannungsbehälters kann bevorzugt so gewählt werden, daß vor Ablagerung des Pulvers im Entspannungsbehälter das Pulver noch eine Flugstrecke von mindestens 1/10tel Sekunde zurücklegt. Das Pulver kann anschließend zu Granulat weiterverarbeitet werden. Gegebenenfalls kann man es auch noch kompaktieren.

Beim Anfahren des Verfahrens beginnt man zunächst mit Fluid-Überschüssen von 7 bis 15 Gewichtsteilen pro Gewichtsteil Polycarbonat-Methylenchlorid-Lösung, bevorzugt mit Überschüssen zwischen 7 und 10 Gewichtsteilen, insbesondere von 8 bis 10 Gewichtsteilen. Dabei kann in den ersten Minuten des Anfahrens zunächst auch ein höherer Verunreinigungsgrad des eingesetzten CO₂-Fluids vorliegen (z.B. enthält das Fluid nur 50 bis 60 Gew.-% - bezogen auf Gesamtmasse Fluid - reines Kohlendioxid, während die anderen Komponenten zum Beispiel aus anderen Inertgasen bestehen oder Prozeß-inherente Verunreinigungen sein dürfen. Im allgemeinen wird dann nach 3 bis 10 Minuten die Fluidmenge innerhalb von Zeiten von 1 bis 10 Minuten kontinuierich auf Überschüsse zwischen 2 und 4 Gewichtsteilen Fluid pro Gewichtsteil Polymerlösung heruntergefahren. Dabei kann es von Vorteil sein, den Druck von 60 bis 150 bar auf 80 bis 200 bar und die Einleitungstemperatur des Fluids kontinuierlich von 70 bis 100°C auf Werte von 90 bis 130°C zu steigern.

Das Fluid wird über einem Kondensator/Verdichter-System in den Prozeß zurückgeführt.

### Beispiele

### Allgemeine Vorschriften für die Beispiele:

Es werden 700 g Polycarbonat auf Basis von 2,2-bis(4-hydroxy-phenyl)-propan (=Bisphenol A) (Makrolon 2805) mit einer relativen Viskosität, gemessen für 5 g Polymer auf 1000 g Methylenchlorid bei 25°C, von 1.28 in 4300 g Methylenchlorid gelöst. Die Polymerlösung befindet sich in einem 50 Liter-Autoklaven bei 50°C, in den ggf. Kohlendioxid solange unter intensivem Rühren eingeleitet wird, bis ein vorgegebener Vordruck eingestellt ist. Anschließend wird die Lösung unter Nachführung von Kohlendioxid in einer konischen Mischdüse mit Drallgeber und zwei Zuführungen für weiteres Kohlendioxid bzw. diese Polymerlösung zusammengebracht. Die Zulaufgeschwindigkeit der Polymerlösung und des Kohlendioxids in der Düse wird eingestellt. Hinter der Düse befindet sich ein 100 Liter-Entspannungsbehälter, in den das ausfallende Polycarbonat zusammen mit dem Methylenchlorid und dem Kohlendioxid verwirbelt wird. Als Verfahrensparameter werden zum Anfahren des Prozesses folgende Parameter variiert:
- Vordruck im Vorratsbehälter
- Zulaufmenge der Polymerlösung pro Zeiteinheit
- Zulaufmenge des Kohlendioxids pro Zeiteinheit

In allen Versuchen wurden der besseren Vergleichbarkeit wegen ein CO₂-Druck vor der Düse von 70 bar bei einer CO₂-Temperatur von 100°C aufgebaut. Die Polycarbonat-Lösung war 14%ig und lag bei 25°C vor, im Entspannungsbehälter herrschte eine Temperatur von 60°C.

Es wird das Anfahrverhalten des Destraktionsverfahrens optisch beurteilt (Verstopfungsneigung der Düse).

Die nachfolgende Tabelle faßt die einzelnen Ergebnisse zusammen. Dabei wird innerhalb von 3 Minuten die Anfangszulaufmenge kontinuierlich auf den Endzulaufswert reduziert.

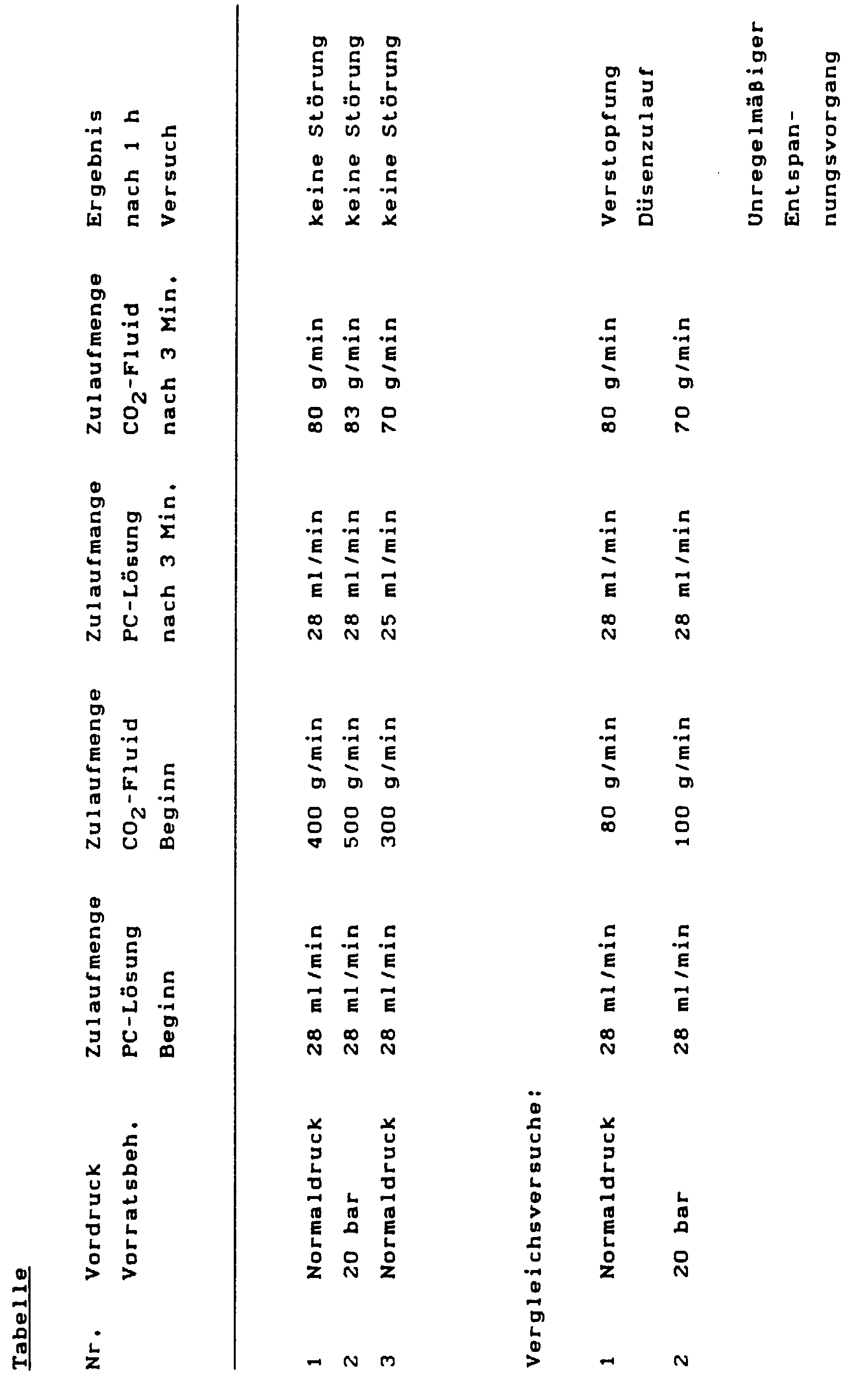

## Patentansprüche

1. Verfahren zur Isolierung von Polycarbonat aus Methylenchlorid unter Fällung in kohlendioxidhaltigem Fluird, wobei man
a) ausgehend von einer Polycarbonat-Methylenchlorid-Lösung, die 10 bis 40 Gew.-% Polycarbonat, bezogen auf das Gesamtgewicht der Polycarbonat-Lösung, enthält,
c) die Lösung in einer Zweistoffdüse mit kohlendioxidhaltigem Fluid unter einem Druck zwischen 50 und 300 bar und bei Temperaturen zwischen 40 und 80 °C zusammenbringt und anschließend das ausgefällte Polycarbonat zusammen mit dem Methylenchlorid und dem kohlendioxidhaltigen Fluid in einem Behälter entspannt, das Fluid über ein Kondensator/Verdichter-System in den Prozeß zurückführt und
e) die Dosierung von kohlendioxidhaltigem Fluid so steuert, daß in der Maßnahme c) das System Polycarbonat : Methylenchlorid : Kohlendioxid oberhalb des Gelierbereichs ist und Polycarbonat rasch als Festpartikel aus dem Dreiphasensystem ausfällt,
dadurch gekennzeichnet, daß das Verfahren durch die Maßnahmen
f) Anfahren unter CO₂-Überschuß von mindestens 7 bis 15 Gewichtsteilen kohlendioxidhaltiges Fluid, welches wenigstens 50 Gew.-% Kohlendioxid enthält, pro Gewichtsteil Polymerlösung und
g) Reduzierung des CO₂-Überschusses binnen 1 bis 10 Minuten auf Überschüsse von 4:1 bis 2:1 pro Gewichtsteil Polycarbonat-Lösung,
hinsichtlich seiner Standzeit verbessert wird, wobei
h) während dieser Zeit der Gelierbereich des Polycarbonat-Methylenchlorid-CO₂-Fluid-Phasendiagramms durchschritten wird.

2. Verfahren zur Isolierung von Polycarbonat aus Methylenchlorid unter Fällung in kohlendioxidhaltigem Fluid, wobei man
a) ausgehend von einer Polycarbonat-Methylenchlorid-Lösung, die 10 bis 40 Gew.-% Polycarbonat, bezogen auf das Gesamtgewicht der Polycarbonat-Lösung, enthält,
b) zunächst kohlendioxidhaltiges Fluid so einmischt, daß das System Polycarbonat: Methylenchlorid : Kohlendioxid noch nicht geliert, bei Drücken zwischen 10 und 50 bar und Temperaturen zwischen 30 und 50 °C,
c) anschließend die Lösung in einer Zweistoffdüse mit kohlendioxidhaltigem Fluid unter einem Druck zwischen 50 und 300 bar und bei Temperaturen zwischen 40 und 80°C zusammenbringt, anschließend das ausgefällte Polycarbonat zusammen mit dem Methylenchlorid und dem kohlendioxidhaltigen Fluid in einem Behälter entspannt, das Fluid über ein Kondensator/Verdichter-System in den Prozeß zurückführt,
d) wobei zwischen der Maßnahme b) und c) eine Verweilzeit von mindestens 0,1 Sekunden realisiert wird und
e) die Dosierung von kohlendioxidhaltigem Fluid so steuert, daß in der Maßnahme b) Polycarbonat noch nicht geliert oder ausfällt und in der Maßnahme c) das System Polycarbonat : Methylenchlorid : Kohlendioxid oberhalb des Gelierbereiches ist und Polycarbonat rasch als Festpartikel aus dem Dreiphasensystem ausfällt,
dadurch gekennzeichnet, daß das Verfahren durch die Maßnahmen
f) Anfahren unter CO₂-Überschuß von mindestens 7 bis 15 Gewichtsteilen kohlendioxidhaltiges Fluid, welches wenigstens 50 Gew.-% Kohlendioxid enthält, pro Gewichtsteil Polymerlösung und
g) Reduzierung des CO₂-Überschusses binnen 1 bis 10 Minuten auf Überschüsse von 4:1 bis 2:1 pro Gewichtsteil Polycarbonat-Lösung,
hinsichtlich seiner Standzeit verbessert wird, wobei
h) während dieser Zeit der Gelierbereich des Polycarbonat-Methylenchlorid-CO₂-Fluid-Phasendiagramms durchschritten wird.

## Claims

1. Process for isolating polycarbonate from methylene chloride by precipitation in a fluid containing carbon dioxide, wherein,
a) starting from a solution of polycarbonate in methylene chloride which contains 10 to 40 wt.% of polycarbonate, relative to the total weight of the polycarbonate solution,
c) the solution is brought into contact with a fluid containing carbon dioxide in a two-fluid nozzle at a pressure of between 50 and 300 bar and at temperatures of between 40 and 80°C and the precipitated polycarbonate is then depressurised together with the methylene chloride and the fluid containing carbon dioxide in a container, the fluid is returned to the process via a condenser/compressor system and
e) introduction of the fluid containing carbon dioxide is controlled such that during measure c) the polycarbonate/methylene chloride/carbon dioxide system is above the gelation range and polycarbonate rapidly precipitates from the three-phase system as solid particles,
characterised in that the process is improved with regard to the service life thereof by the measures
f) startup with a CO₂ excess of at least 7 to 15 parts by weight of fluid containing carbon dioxide, which contains at least 50 wt.% of carbon dioxide, per part by weight of polymer solution and
g) reduction of the CO₂ excess within 1 to 10 minutes to excesses of 4:1 to 2:1 per part by weight of polycarbonate solution,
wherein
h) during this time the system passes through the gelation range of the polycarbonate/methylene chloride/CO₂ fluid phase diagram.

2. Process for isolating polycarbonate from methylene chloride by precipitation in a fluid containing carbon dioxide, wherein,
a) starting from a solution of polycarbonate in methylene chloride which contains 10 to 40 wt.% of polycarbonate, relative to the total weight of the polycarbonate solution,
b) fluid containing carbon dioxide is first mixed such that the polycarbonate/methylene chloride/carbon dioxide system does not yet gel, at pressures of between 10 and 50 bar and temperatures of between 30 and 50°C,
c) the solution is then brought into contact with a fluid containing carbon dioxide in a two-fluid nozzle at a pressure of between 50 and 300 bar and at temperatures of between 40 and 80°C and the precipitated polycarbonate is then depressurised together with the methylene chloride and the fluid containing carbon dioxide in a container, the fluid is returned to the process via a condenser/compressor system,
d) wherein a residence time of at least 0.1 second is provided between measures b) and c) and
e) introduction of the fluid containing carbon dioxide is controlled such that during measure b) polycarbonate does not yet gel or precipitate and during measure c) the polycarbonate/methylene chloride/carbon dioxide system is above the gelation range and polycarbonate rapidly precipitates from the three-phase system as solid particles,
characterised in that the process is improved with regard to the service life thereof by the measures
f) startup with a CO₂ excess of at least 7 to 15 parts by weight of fluid containing carbon dioxide, which contains at least 50 wt.% of carbon dioxide, per part by weight of polymer solution and
g) reduction of the CO₂ excess within 1 to 10 minutes to excesses of 4:1 to 2:1 per part by weight of polycarbonate solution,
wherein
h) during this time the system passes through the gelation range of the polycarbonate/methylene chloride/CO₂ fluid phase diagram.

## Revendications

1. Procédé d'isolement de polycarbonate à partir de chlorure de méthylène par précipitation dans un fluide contenant du dioxyde de carbone, où :
a) partant d'une solution polycarbonate-chlorure de méthylène, qui contient 10 à 40% en poids de polycarbonate, sur base du poids total de la solution de polycarbonate ;
c) la solution est mise en contact, dans une buse à deux composants, avec le fluide contenant du dioxyde de carbone sous une pression allant de 50 à 300 bar, à des températures allant de 40 à 80°C, et ensuite le polycarbonate précipité est détendu avec le chlorure de méthylène et le fluide contenant le dioxyde de carbone, dans un récipient, le fluide est ramené dans le processus par un système condensateur/compresseur, et
e) l'addition du fluide contenant le dioxyde de carbone est conduite de sorte que dans l'étape c), le système polycarbonate:chlorure de méthylène:dioxyde de carbone est au-dessus du domaine de gélification et le polycarbonate précipite rapidement sous forme de particules solides du système triphasique,
caractérisé en ce que le procédé est amélioré en ce qui concerne sa durée d'abandon, par les étapes de
f) démarrage avec un excès de CO₂ d'au moins 7 à 15 parties en poids du fluide contenant le dioxyde de carbone, lequel contient au moins 50% en poids de dioxyde de carbone, par partie en poids de la solution de polymère, et
g) réduction de l'excès de CO₂ en 1 à 10 minutes jusqu'à un excès de 4:1 à 2:1 par partie en poids de la solution de polycarbonate, où
h) pendant cette période, on traverse le domaine de gélification du diagramme des phases polycarbonate-chlorure de méthylène-fluide-CO₂.

2. Procédé d'isolement de polycarbonate à partir de chlorure de méthylène par précipitation dans un fluide contenant du dioxyde de carbone, où :
a) partant d'une solution polycarbonate-chlorure de méthylène, qui contient 10 à 40% en poids de polycarbonate, sur base du poids total de la solution de polycarbonate ;
b) l'on mélange d'abord un fluide contenant du dioxyde de carbone de sorte que le système polycarbonate-chlorure de méthylène-dioxyde de carbone ne gèle pas encore, à des pressions allant de 10 à 50 bar et des températures allant de 30 à 50°C ;
c) ensuite la solution est mise en contact, dans une buse à deux composants, avec le fluide contenant du dioxyde de carbone sous une pression allant de 50 à 300 bar, à des températures allant de 40 à 80°C, ensuite le polycarbonate précipité est détendu avec le chlorure de méthylène et le fluide contenant du dioxyde de carbone, le fluide est ramené dans le procédé par un système condensateur/compresseur,
d) où entre les étapes b) et c), un temps de contact d'au moins 0,1 seconde est réalisé, et
e) l'addition du fluide contenant le dioxyde de carbone est conduite de sorte que dans l'étape b), le polycarbonate ne gèle ou ne précipite pas encore et dans l'étape c), le système polycarbonate:chlorure de méthylène:dioxyde de carbone est au-dessus du domaine de gélification et le polycarbonate précipite rapidement sous forme de particules solides du système triphasique,
caractérisé en ce que le procédé est amélioré en ce qui concerne sa durée d'abandon, par les étapes de :
f) démarrage avec un excès de CO₂ d'au moins 7 à 15 parties en poids du fluide contenant le dioxyde de carbone, lequel contient au moins 50% en poids de dioxyde de carbone, par partie en poids de la solution de polymère, et
g) réduction de l'excès de CO₂ en 1 à 10 minutes en un excès de 4:1 à 2:1 par partie en poids de la solution de polycarbonate, où
h) pendant cette période, on traverse le domaine de gélification du diagramme des phases polycarbonate-chlorure de méthylène-fluide-CO₂.
